# EUROPEAN PATENT APPLICATION

(11) **EP 2 704 133 A1**
(43) Date of publication of application: **05.03.2014**
(21) Application number: 11874760.9
(22) Date of filing: 15.12.2011
(51) Int. Cl.: G09G 5/00, G09G 3/32, G06F 3/14

(54) **DISPLAY METHOD AND DEVICE**

(30) Priority: 28.10.2011 CN 201110333520
(71) Applicant: ZTE Corporation, Shenzhen, Guangdong 518057 (CN)
(72) Inventor: WANG, Wenhuan, Shenzhen Guangdong 518057 (CN); YUAN, Xiaoli, Shenzhen Guangdong 518057 (CN); HU, Yonggang, Shenzhen Guangdong 518057 (CN); YAO, Nan, Shenzhen Guangdong 518057 (CN); LI, Xiaoyan, Shenzhen Guangdong 518057 (CN)
(74) Representative: Garratt, Peter Douglas
(86) International application number: PCT/CN2011/084078
(87) International publication number: WO 2013/060069

(57) **Abstract**

A display method and device are provided, wherein, the display method includes: obtaining a preset display mode parameter when an application refreshes a screen; placing a bitmap of a specified application interface into a set area according to the display mode parameter; and mixing a background bitmap with the bitmap in the set area and then displaying. The display method and device can achieve the objective of power saving of a mobile terminal by means of adjusting a position of a display area and a display scale for displaying the application interface on the display screen.

## Description

### Technical Field

The present document relates to a display method and device for realizing power saving by adjusting a display mode of a display screen.

### Background of the Related Art

The standby time of the current mobile terminal becomes an important indicator. Since the mobile terminal has more and more functions and the processing capacity gets stronger and stronger, its power consumption gets greater and greater, and the standby time gets also shorter and shorter. The user can save power through modifying the screen brightness, time, etc.; and the terminal manufacturer takes various measures to increase the standby time in software and hardware design as well.

With the technical development, some display screens of which the power consumption is influenced by the display color, etc., appear, such as the organic light emitting diode (OLED), in this way, the objective of power saving can be achieved by adjusting the user interface (UI) color. But the whole screen displays the application interface when the current terminal screen is lighted; in some cases, the user may only want to see some concerned areas while not displaying other area interfaces, this cannot be accomplished at present; and the display screen gets bigger and bigger now, some applications only need to occupy part of the screen for displaying, with no need of lighting the whole screen, therefore, lighting the whole screen undoubtedly wastes the needless electric quantity.

### Summary of the Invention

The technical problem that the present document requires to solve is to provide a display method and device, to achieve the objective of power saving.

In order to solve the above-mentioned technical problem, the present document provides a display method, comprising:
obtaining a preset display mode parameter when an application refreshes a screen;
placing a bitmap of a specified application interface into a set area according to the display mode parameter; and
mixing a background bitmap with the bitmap in the set area and then displaying.

The above-mentioned method further has the following characteristics: the step of placing a bitmap of a specified application interface into a set area according to the display mode parameter comprises:
scaling the bitmap of a current application interface as per a preset scale according to the display mode parameter representing displaying in scale integrally; and
placing the scaled bitmap into the set area.

The above-mentioned method further has the following characteristics: wherein, a step of placing a bitmap to be displayed into a set area according to the display mode parameter comprises:
capturing a part of the bitmap in the bitmap of the current application interface according to a display mode parameter representing displaying the captured part; and
placing the captured bitmap into the set area.

The above-mentioned method further has the following characteristics: the background bitmap comprises:
a preset bitmap resource or a predetermined pure color bitmap.

In order to solve the above-mentioned problem, the present document further provides a device with a display screen, comprising:
an obtaining module, configured to obtain a preset display mode parameter when an application refreshes a screen;
a bitmap processing module, configured to place a bitmap of a specified application interface into a set area according to the display mode parameter, mix a background bitmap with the bitmap in the set area; and
a display module, configured to display the bitmap processed by the bitmap processing module on the display screen.

The above-mentioned device further has the following characteristics: the bitmap processing module comprises:
a scaling unit, configured to scale the bitmap of a current application interface as per a preset scale according to the display mode parameter representing displaying in scale integrally; and
a placing unit, configured to place the scaled bitmap into the set area.

The above-mentioned device further has the following characteristics: the bitmap processing module comprises:
a capturing unit, configured to capture a part of the bitmap in the bitmap of the current application interface according to a display mode parameter representing displaying the captured part; and
a placing unit, configured to place the captured bitmap into the set area.

The above-mentioned device further has the following characteristics: the background bitmap comprises:
a preset bitmap resource or a predetermined pure color bitmap.

The above-mentioned device further has the following characteristics: the device further comprises:
a setting module, configured to receive the display mode parameter set by a user; and
a storage module, configured to store the display mode parameter.

The above-mentioned device further has the following characteristics: the display screen comprises:
an organic light emitting diodes display screen or an active matrix/organic light emitting diode panel.

The above-mentioned display method and device can achieve the objective of power saving of a mobile terminal by means of adjusting a position of a display area and a display scale for displaying the application interface on the display screen.

### Brief Description of Drawings

FIG. 1 is a diagram of a device according to an embodiment of the present document;
FIG. 2 is a flow chart of a display method according to an embodiment of the present document;
FIG. 3 is a flow chart of implementation of setting a display mode according to an embodiment of the present document.

### Preferred Embodiments of the Invention

In consideration of some current appeared display screens which can change the power consumption through changing the bitmap color, the embodiment of the present document provides a device and method for realizing the power saving of the mobile terminal by adjusting the display mode on the display screen. The present document is suitable for any display screen so long as the power can be adjusted through the color, such as, an OLED, an Active Matrix/Organic Light Emitting Diode (AMOLED) etc., including but not limited to those two.

In order to make the objective, technical scheme and advantage of the present document much more clear and obvious, the embodiment of the present document is described in detail with reference to the accompanying drawings hereinafter. It should be illustrated that, in the case of not conflicting, the embodiments in the present application and features in these embodiments can be combined with each other.

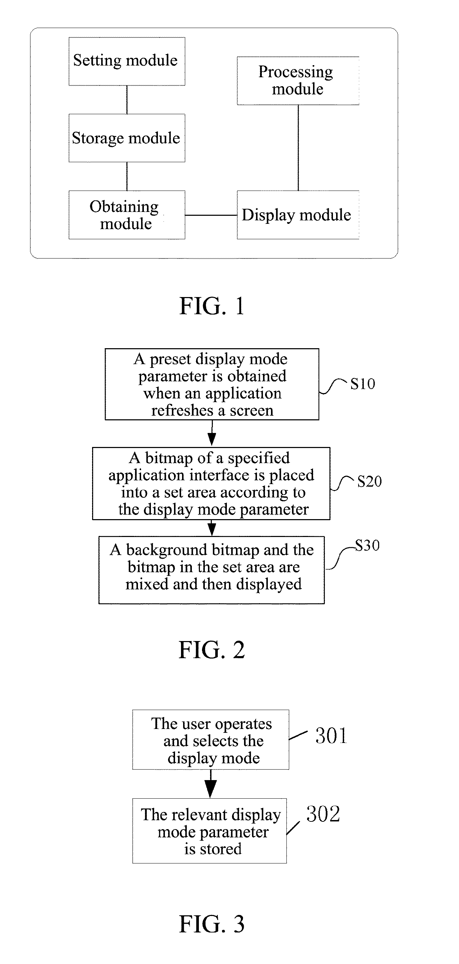

FIG. 1 is a diagram of a device according to an embodiment of the present document; as shown in FIG. 1, the device of the present embodiment includes:
an obtaining module, configured to obtain a preset display mode parameter when an application refreshes a screen;
a bitmap processing module, configured to place a bitmap of a specified application interface into a set area according to the display mode parameter, mix a background bitmap with the bitmap in the set area; and
a display module, configured to display the processed bitmap resource on the display screen to present to the user.

Wherein, the bitmap processing module is configured to process the application display interface: if the user sets the integrated scale display, then performing the bitmap scale processing, and mixing with the non-application interface; if the user sets to display the captured part of the interface, performing the capture operation on the application interface, taking out the part of the bitmap information to be displayed, and mixing with the non-application interface.

The mixing processing can be divided into two ways: one is to mix with a pure color background, and that color is the best color which passes the power saving test and also can take the optimum color by combining with the visual effect result; another one is to mix with the stored background picture resource.

Wherein, the device of the present embodiment further can include:
a setting module, configured to manage the display mode, for example, receive the display mode parameter set by the user, and also can provide the application display modes for the user to select, for example including: displaying the interface in scale integrally, displaying the captured part of the application interface, displaying the located area correspondingly, or displaying normally; and
a storage module, configured to store the set display mode parameter, store the picture resource file (optional) displayed at the non-application interface, preset the display mode setting parameter (which can be selected with respect to different applications).

Wherein, the display screen can include:
an OLED display screen or an AMOLED.

The present embodiment provides a display screen which can change the power consumption with respect to the display color, and achieves the objective of power saving by means of adjusting the position of the display area and the display scale for displaying the application interface on the display screen.

In a preferable embodiment, the bitmap processing module can include:
a scaling unit, configured to scale the bitmap of a current application interface as per a preset scale according to the display mode parameter representing displaying in scale integrally; and
a placing unit, configured to place the scaled bitmap into the set area.

In a preferable embodiment, the bitmap processing module can include:
a capturing unit, configured to capture a part of the bitmap in the bitmap of the current application interface according to a display mode parameter representing displaying the captured part; and
a placing unit, configured to place the captured bitmap into the set area.

Wherein, the background bitmap can include:
a preset bitmap resource or a predetermined pure color bitmap.

FIG. 2 is a flow chart of a display method according to an embodiment of the present document; as shown in FIG. 2, the method of the present embodiment includes the following steps:
in S10, a preset display mode parameter is obtained when an application refreshes a screen;
in the present step, the display-related parameter, i.e. the display mode, the display area, and the background bitmap information, can be read from the storage module.
in S20, a bitmap of a specified application interface is placed into a set area according to the display mode parameter;
if the display mode parameter represents displaying normally, then no processing is performed;
if the display mode parameter represents displaying in scale integrally, then the current bitmap is scaled according to the scale at first, and then the scaled bitmap is placed into the set area;
in that step, at first, the bitmap resource information bitmap1 can be obtained after the combination of each element of the current application interface, and the bitmap 1 data are scaled and processed according to the preset scale to obtain the scaled bitmap resource information bitmap2; secondly, the pure color filling bitmap of the real display screen size or the pre-stored background bitmap information bitmap3 is obtained; and finally, the set display area of the application interface is converted as the corresponding coordinate area (including the upper left initial coordinate (x, y), length w and height h) on the terminal, and the scaled bitmap resource bitmap2 is mixed with the bitmap3 to obtain the final bitmap resource bitmap4 according to the set area coordinate;
if the display mode parameter represents displaying the captured part, then the captured display part of the current bitmap is taken out, and then the captured bitmap is placed into the set area;
in that step, at first, the bitmap resource information bitmap 1 can further be obtained after the combination of each element of the current application interface, and the bitmap resource information bitmap2 of the captured display part is obtained from the bitmap1; secondly, the pure color filling bitmap of the real display screen size or the pre-stored background bitmap information bitmap3 is obtained; and finally the bitmap resource bitmap2 is mixed with the bitmap3 according to the coordinate of the real location to obtain the final bitmap resource bitmap4;
in S30, a background bitmap and the bitmap in the set area are mixed and then displayed.

The processed bitmap resource information bitmap4 is displayed on the display screen.

The method of the present embodiment achieves the objective of power saving by means of reducing the area for displaying the application interface on the display screen and filling the surplus area with the bitmap with a comparatively power-saving color (on the premise that the power consumption of the display screen is influenced by the display color).

The background bitmap in step S30 can be a preset comparatively power-saving bitmap resource or a pure color bitmap with the comparatively power-saving color.

The present embodiment provides a method which can reduce the power consumption of the display screen by adjusting the display mode to increase the standby time of the mobile termination, aiming at some currently appeared display screens of which the power consumption can be changed by changing the display color, which has an extremely high market promotion value and usage value; the method of the present embodiment is suitable for any display screen so long as the power of the display screen can be adjusted through the color.

FIG. 3 is a flow chart of setting a display mode parameter according to an embodiment of the present document; as shown in FIG. 3, the present embodiment includes the following steps:
in step 301, the user operates and selects the display mode;
in step 302, the relevant display mode parameter is stored.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

The above-mentioned embodiments are only used to illustrate the technical scheme of the present document while not to limit, and the present document is described in details only referring to the preferable embodiments. Those skilled in the art should understand that they can make the modifications and equivalents according to the technical scheme of the present document without departing from the spirit and scope of the present document, which should be embodied in the scope of the appended claims of the present document.

### Industrial Applicability

The present document provides a display method and device, which can achieve the objective of power saving of a mobile terminal by means of adjusting a position of a display area and a display scale for displaying the application interface on the display screen.

## Claims

1. A display method, comprising:
obtaining a preset display mode parameter when an application refreshes a screen;
placing a bitmap of a specified application interface into a set area according to the display mode parameter; and
mixing a background bitmap with the bitmap in the set area and then displaying.

2. The method according to claim 1, wherein, the step of placing a bitmap of a specified application interface into a set area according to the display mode parameter comprises:
scaling the bitmap of a current application interface as per a preset scale according to the display mode parameter representing displaying in scale integrally; and
placing the scaled bitmap into the set area.

3. The method according to claim 1, wherein, a step of placing a bitmap to be displayed into a set area according to the display mode parameter comprises:
capturing a part of a bitmap in the bitmap of the current application interface according to a display mode parameter representing displaying the captured part; and
placing the captured bitmap into the set area.

4. The method according to any one of claims 1-3, wherein, the background bitmap comprises:
a preset bitmap resource or a predetermined pure color bitmap.

5. A device with a display screen, comprising:
an obtaining module, configured to obtain a preset display mode parameter when an application refreshes a screen;
a bitmap processing module, configured to place a bitmap of a specified application interface into a set area according to the display mode parameter, mix a background bitmap with the bitmap in the set area; and
a display module, configured to display the bitmap processed by the bitmap processing module on the display screen.

6. The device according to claim 5, wherein, the bitmap processing module comprises:
a scaling unit, configured to scale the bitmap of a current application interface as per a preset scale according to the display mode parameter representing displaying in scale integrally; and
a placing unit, configured to place the scaled bitmap into the set area.

7. The device according to claim 5, wherein, the bitmap processing module comprises:
a capturing unit, configured to capture a part of a bitmap in the bitmap of the current application interface according to a display mode parameter representing displaying the captured part; and
a placing unit, configured to place the captured bitmap into the set area.

8. The device according to claim 5, wherein, the background bitmap comprises:
a preset bitmap resource or a predetermined pure color bitmap.

9. The device according to claim 5, further comprising:
a setting module, configured to receive the display mode parameter set by a user; and
a storage module, configured to store the display mode parameter.

10. The device according to any one of claims 5-9, wherein, the display screen comprises:
an organic light emitting diode display screen or an active matrix/organic light emitting diode panel.
